# EUROPEAN PATENT APPLICATION

(11) **EP 4 679 929 A1**
(43) Date of publication of application: **14.01.2026**
(21) Application number: 24777899.6
(22) Date of filing: 22.03.2024
(51) Int. Cl.: H04W 76/00

(54) **NETWORK DEVICE**

(30) Priority: 28.03.2023 CN 202310316682
(71) Applicant: Huawei Technologies Co., Ltd., Shenzhen, Guangdong 518129 (CN)
(72) Inventor: FENG, Xin, Shenzhen, Guangdong 518129 (CN); LIN, Huajiong, Shenzhen, Guangdong 518129 (CN); MA, Chuanhui, Shenzhen, Guangdong 518129 (CN); ZHAO, Yanqing, Shenzhen, Guangdong 518129 (CN); CHEN, Yan, Shenzhen, Guangdong 518129 (CN)
(74) Representative: Gill Jennings & Every LLP
(86) International application number: PCT/CN2024/083217
(87) International publication number: WO 2024/199110

(57) **Abstract**

An embodiment of this application provides a network device, including a processing module, a signal transmission module, an antenna module, and a phase modulation module. The signal transmission module is electrically connected to the processing module and the antenna module. The signal transmission module is configured to: transmit a signal sent by the processing module to the antenna module, and the signal transmission module is configured to transmit a signal received by the antenna module to the processing module. The antenna module includes M antennas, a spacing between two adjacent antennas in the M antennas is one half of a target wavelength, and the M antennas are arranged in a planar configuration. The phase modulation module is electrically connected to the processing module, the phase modulation module is located on a plane perpendicular to a radiation direction of the antenna module, the phase modulation module includes a plurality of phase modulation units, and the phase modulation module is configured to modulate, based on a control signal of the processing module, a wavefront phase of signals transmitted or received through the M antennas. The network device can meet requirements of both communication and sensing functions.

## Description

This application claims priority to Chinese Patent Application No. 202310316682.6, filed with the China National Intellectual Property Administration on March 28, 2023 and entitled "NETWORK DEVICE", which is incorporated herein by reference in its entirety.

### TECHNICAL FIELD

This application relates to the communication field, and specifically, to a network device.

### BACKGROUND

As a communication system evolves from the 5th generation mobile communication technology (5th generation mobile communication technology, 5G) to the 6th generation mobile communication technology (6th generation mobile communication technology, 6G), it envisions networks with comprehensive coverage, green intelligence, and sensory interconnectivity. On one hand, the exponential growth in wireless communication and sensing devices has exacerbated the tension between ever-increasing service demands and wireless resources. On the other hand, realization of the 6G vision requires a closed-loop information flow process encompassing environmental sensing information collection, information exchange and sharing, intelligent information processing, and hierarchical distribution of control information. However, current wireless network technologies struggle to meet emerging application demands of the post-5G and 6G eras. Therefore, there is an urgent need to develop a new network architecture that features efficient resource utilization, tailored applications, and intelligent adaptation, to integrate communication and sensing, that is, to implement harmonized communication and sensing (harmonized communication and sensing, HCS).

HCS is an information processing technology that implements coordination between a sensing function and a communication function based on shared software and hardware resources or information. For example, densely deployed small cells within indoor public spaces not only provide communication functions for users but also sense their locations of users, greatly enriching digital application scenarios indoors.

While HCS enables substantial reuse of communication resources and sensing resources, facilitating unified designs for both the functions. However, the communication function and the sensing function have different beam configuration requirements, and existing network devices are usually designed based on requirements of the communication function rather than the sensing function. Therefore, currently, there is a need to fulfill requirements of both the communication function and the sensing function.

### SUMMARY

Embodiments of this application provide a network device, to meet requirements of both communication and sensing functions.

According to a first aspect, an embodiment of this application provides a network device, including a processing module, a signal transmission module, an antenna module, and a phase modulation module. A first end of the signal transmission module is electrically connected to the processing module, a second end of the signal transmission module is electrically connected to the antenna module, the signal transmission module is configured to transmit a signal sent by the processing module to the antenna module, and the signal transmission module is configured to transmit a signal received by the antenna module to the processing module. The antenna module includes M antennas, a spacing between two adjacent antennas in the M antennas is one half of a target wavelength, the target wavelength is a wavelength of signals transmitted through the M antennas, and the M antennas are arranged in a planar configuration, where M is a positive integer greater than or equal to 4. The phase modulation module is electrically connected to the processing module, the phase modulation module is located on a plane perpendicular to a radiation direction of the antenna module, the phase modulation module includes a plurality of phase modulation units, and the phase modulation module is configured to modulate, based on a control signal of the processing module, a wavefront phase of signals transmitted or received through the M antennas.

A good sensing function needs to be implemented by using an antenna with a high angular resolution, and a half-wavelength antenna spacing is a key parameter for implementing the high angular resolution. However, a good communication function (namely, a narrow beam communication function) usually needs to be implemented by using an antenna module including a power divider. The antenna module is large in size, making it difficult to implement a half-wavelength antenna spacing. This results in poor performance of an existing network device in terms of the sensing function. In this embodiment of this application, a beam transmitted by an antenna in the antenna module becomes narrower after passing through the phase modulation unit. Therefore, the antenna in this embodiment of this application does not need to use a power divider to implement the narrow beam communication function, so that a size of the antenna is small, and the spacing between the two adjacent antennas can be set to one half of the target wavelength. This can meet both a requirement of the communication function for a narrow beam and a requirement of the sensing function for an antenna spacing.

Optionally, the signal transmission module includes N transmission channels and K switches, the N transmission channels are electrically connected to the processing module, K transmission channels in the N transmission channels are electrically connected to the K switches, and the K switches are electrically connected to P antennas in the M antennas, where N, K, and P are all positive integers, N is greater than or equal to K, M is greater than or equal to P, and P is greater than K. The K switches are configured to switch a relationship of connection between the P antennas and the K transmission channels.

Generally, the sensing function requires a receive end to simultaneously receive a plurality of sensing signals through a plurality of antennas, and the receive end performs positioning or other sensing processing based on a difference between different sensing signals. If a moving speed of a to-be-measured target is low, a location of the to-be-measured target almost does not change in a short time. Therefore, in a scenario of sensing a slowly-moving target, receiving sensing signals a plurality of times in a short time has little impact on the sensing function. Based on this principle, in this embodiment, the relationship of connection between the P antennas and the K transmission channels is switched by using the K switches, and the P antennas may receive sensing signals a plurality of times. This reduces a quantity of transmission channels without affecting sensing performance, thereby reducing costs of the network device.

Optionally, the M antennas include a first antenna set and a second antenna set, a quantity of antennas in the first antenna set is equal to a quantity of antennas in the second antenna set, antennas in the first antenna set are spaced apart from each other, antennas in the second antenna set are spaced apart from each other, the first antenna set is used only for sensing, and the second antenna set is used for sensing and communication.

Compared with continuously disposing the antennas in the second antenna set, spacing the antennas in the second antenna set apart from each other increases a spacing between communication antennas, and reduces a correlation between the communication antennas. This improves a communication capacity.

Optionally, M is equal to P, N is equal to K, M is an even number, N is equal to M/2, and the K switches are single-pole double-throw switches.

For example, both M and P are equal to 8, and both N and K are equal to 4. In this case, the network device includes eight antennas, four transmission channels, and four single-pole double-throw switches. Through switching of the four single-pole double-throw switches, the network device can complete reception of the sensing signal by performing receiving twice. This can reduce a time difference between different sensing signals, and thus reduce a negative impact of receiving the sensing signal in batches on the sensing function.

Optionally, the phase modulation module includes M phase modulation unit sets, and the M phase modulation unit sets are sets of phase modulation units in a coverage area of beams transmitted through the M antennas on the phase modulation module.

Because beams of different antennas may have different phase modulation requirements, disposing different phase modulation unit sets for the different antennas may meet the phase modulation requirements of the different antennas.

Optionally, the M phase modulation unit sets do not include a shared phase modulation unit.

The M phase modulation unit sets do not include a shared phase modulation unit, so that each phase modulation unit set needs to modulate only a phase of an antenna corresponding to the phase modulation unit set. This can reduce configuration complexity of the phase modulation unit set.

Optionally, the M phase modulation unit sets include a shared phase modulation unit.

If the M phase modulation unit sets are independently disposed, additional processing needs to be performed on a phase modulation unit at a boundary of adjacent phase modulation unit sets, so that a shape of each phase modulation unit set matches that of a beam projection. This increases manufacturing difficulty and manufacturing costs of the phase modulation module. In this embodiment, different phase modulation unit sets may share some phase modulation units, without a need to perform additional processing on a phase modulation unit at a boundary, so that manufacturing difficulty and manufacturing costs of the phase modulation module can be reduced.

Optionally, the M phase modulation unit sets include a first phase modulation unit set and a second phase modulation unit set, the M antennas include a first antenna and a second antenna, the first phase modulation unit set is a phase modulation unit set corresponding to the first antenna, the second phase modulation unit set is a phase modulation unit set corresponding to the second antenna, and a phase modulation amount of a shared phase modulation unit between the first phase modulation unit set and the second phase modulation unit set is configured as a value related to a required phase modulation amount of the first antenna and a required phase modulation amount of the second antenna.

For example, if the required phase modulation amount of the first antenna is a, and the required phase modulation amount of the second antenna is b, the phase modulation amount of the shared phase modulation unit may be configured as (a+b)/2, to meet the phase modulation requirements of the different antennas as much as possible.

Optionally, shapes of the M phase modulation unit sets match those of beam projections of the M antennas.

Shapes of beam projections of the different antennas may be different. A shape of a phase modulation unit set is designed based on the shape of the beam projection, so that the shapes of the beam projections of the different antennas can be flexibly adapted.

Optionally, the M antennas are arranged in a circular distribution.

A circularly distributed antenna array has balanced performance in each azimuth, and can provide a 360° ambiguity-free sensing function.

According to a second aspect, an embodiment of this application provides a sensing signal processing method, and the method is applied to a network device having the following structure.

The network device includes a processing module, a signal transmission module, an antenna module, and a phase modulation module. A first end of the signal transmission module is electrically connected to the processing module, a second end of the signal transmission module is electrically connected to the antenna module, the signal transmission module is configured to transmit a signal sent by the processing module to the antenna module, and the signal transmission module is configured to transmit a signal received by the antenna module to the processing module. The antenna module includes M antennas, a spacing between two adjacent antennas in the M antennas is one half of a target wavelength, the target wavelength is a wavelength of signals transmitted through the M antennas, and the M antennas are arranged in a planar configuration, where M is a positive integer greater than or equal to 4. The phase modulation module is electrically connected to the processing module, the phase modulation module is located on a plane perpendicular to a radiation direction of the antenna module, the phase modulation module includes a plurality of phase modulation units, the phase modulation unit is a metasurface unit, and the phase modulation module is configured to modulate, based on a control signal of the processing module, a wavefront phase of signals transmitted or received through the M antennas.

The signal transmission module includes N transmission channels and K switches, the N transmission channels are electrically connected to the processing module, K transmission channels in the N transmission channels are electrically connected to the K switches, and the K switches are electrically connected to P antennas in the M antennas, where N, K, and P are all positive integers, N is greater than or equal to K, M is greater than or equal to P, and P is greater than K. The P antennas include a first antenna set and a second antenna set. The K switches are configured to switch a relationship of connection between the first antenna set and the second antenna set, and the K transmission channels.

The method includes: receiving a first sensing signal in a first period of time by using the first antenna set; receiving a second sensing signal in a second period of time by using the second antenna set, where the first period of time and the second period of time are included in a first symbol, and a sequence of the first sensing signal is the same as a sequence of the second sensing signal; and jointly processing the first sensing signal and the second sensing signal.

Generally, a sensing function requires a receive end to receive sensing signals through a plurality of antennas at a same moment. The sensing signals are transmitted by a transmit end, and are received by the receive end after being reflected by a to-be-measured target. The receive end performs positioning or other sensing processing based on differences between sensing signals received through different antennas. If a moving speed of the to-be-measured target is low, a location of the to-be-measured target almost does not change in a short time. Therefore, in a scenario of sensing a slowly-moving target, receiving sensing signals a plurality of times in a short time has little impact on the sensing function. Based on this principle, in this embodiment, a relationship of connection between the P antennas and the K transmission channels is switched by using the K switches, and the P antennas may receive a plurality of sensing signal a plurality of times and jointly process the plurality of sensing signal. This reduces a quantity of transmission channels without affecting sensing performance, thereby reducing costs of the network device.

Optionally, both a frequency domain of the first sensing signal and a frequency domain of the second sensing signal are comb frequency domains.

For example, the first sensing signal and the second sensing signal use only subcarriers whose indexes are even or odd numbers. In this way, time domain sequences of the first sensing signal and the second sensing signal may be repeated, that is, a difference between a phase of the first sensing signal and a phase of the second sensing signal is 0 or π. Channels of sensing signals repeated in the time domain sequence are highly correlated, so that a performance loss caused by jointly processing the first sensing signal and the second sensing signal can be reduced. In addition, a design of sensing signals with repeated time domain sequences allows the receive end to perform channel estimation by using a part of the sensing signal (for example, the first sensing signal). This reduces scanning time overheads of the sensing signal.

Optionally, the first symbol is a guard period between an uplink symbol and a downlink symbol.

Because the network device usually does not transmit service data within the guard period, receiving the sensing signal within the guard period can avoid a negative impact caused by the sensing function on a communication function.

According to a third aspect, a communication apparatus is provided. The apparatus may be a network device, or may be a chip in the network device. The apparatus may include a processing unit and a transceiver unit. When the apparatus is a communication device, the processing unit may be a processor, and the transceiver unit may be a transceiver. The communication device may further include a storage unit, and the storage unit may be a memory. The storage unit is configured to store instructions, and the processing unit is configured to execute the instructions stored in the storage unit, so that the communication device performs the method according to the second aspect and any one of the optional implementations of the second aspect. When the apparatus is a chip in the communication device, the processing unit may be a processor, and the transceiver unit may be an input/output interface, a pin, a circuit, or the like. The processing unit executes instructions stored in a storage unit, so that the communication device performs the method according to the second aspect and any one of the optional implementations of the second aspect. The storage unit may be a storage unit (for example, a register or a cache) inside the chip, or may be a storage unit (for example, a read-only memory or a random access memory) that is in the communication device and that is located outside the chip.

According to a fourth aspect, a computer storage medium is provided. The computer-readable storage medium stores a computer program. When the computer program is executed on a computer, the computer is caused to perform the method according to the second aspect and any one of the optional implementations of the second aspect.

According to a fifth aspect, a computer program product is provided. The computer program product includes computer program code. When the computer program code is run by a communication apparatus, the communication apparatus is caused to perform the method according to the second aspect and any one of the optional implementations of the second aspect.

### BRIEF DESCRIPTION OF DRAWINGS

FIG. 1 is a diagram of an HCS service to which an embodiment of this application is applicable;
FIG. 2 is a diagram of a sensing scenario according to an embodiment of this application;
FIG. 3 is a diagram of a network device according to an embodiment of this application;
FIG. 4 is a diagram of a network device including four antennas according to an embodiment of this application;
FIG. 5 is a diagram of a network device including eight antennas according to an embodiment of this application;
FIG. 6 is a diagram of a network device including one single-pole double-throw switch according to an embodiment of this application;
FIG. 7 is a diagram of a network device including one double-pole double-throw switch according to an embodiment of this application;
FIG. 8 is a diagram of a network device including one double-pole double-throw switch according to an embodiment of this application;
FIG. 9 is a diagram of a network device including four single-pole double-throw switches according to an embodiment of this application;
FIG. 10 is a diagram of a status of a phase modulation module according to an embodiment of this application;
FIG. 11 is a diagram of a status of another phase modulation module according to an embodiment of this application;
FIG. 12 is a diagram of a status of still another phase modulation module according to an embodiment of this application;
FIG. 13 is a diagram of a status of still another phase modulation module according to an embodiment of this application;
FIG. 14 is a diagram of a status of still another phase modulation module according to an embodiment of this application;
FIG. 15 is a diagram of an arrangement manner of phase modulation units according to an embodiment of this application;
FIG. 16 is a diagram of another arrangement manner of phase modulation units according to an embodiment of this application;
FIG. 17 is a diagram of a shape of a phase modulation unit according to an embodiment of this application;
FIG. 18 is a diagram of another shape of a phase modulation unit according to an embodiment of this application;
FIG. 19 is a diagram of a phase modulation module in a transparent state according to an embodiment of this application;
FIG. 20 is a diagram of a beam reconstruction method according to an embodiment of this application;
FIG. 21 is a diagram of another beam reconstruction method according to an embodiment of this application;
FIG. 22 is a diagram of a rectangular antenna array according to an embodiment of this application;
FIG. 23 is a diagram of a sensing signal processing method according to an embodiment of this application;
FIG. 24 is a diagram of a structure of a time domain resource according to an embodiment of this application;
FIG. 25 is a diagram of an implementation effect according to an embodiment of this application;
FIG. 26 is a diagram of another implementation effect according to an embodiment of this application;
FIG. 27 is a diagram of a communication system according to an embodiment of this application; and
FIG. 28 is a diagram of another communication system according to an embodiment of this application.

### DESCRIPTION OF EMBODIMENTS

For ease of understanding of technical solutions of this application, concepts in this application are first briefly described.

Table 1 provides an example of a sensing application scenario according to an embodiment of this application.

**Table 1**

| Infrastructure | Autonomous driving | Portable device |
|---|---|---|
| Posture recognition | Posture recognition | Posture recognition |
| Security check/Personnel recognition | In-vehicle behavior awareness (drunk driving/attention) | Health detection |
| Track management | Anti-collision sensing | Riding helmet |
| Intrusion/Threat detection | Parking sensing | Life detection |
| Imaging/Environment reconstruction/Point cloud | Pedestrian detection | Infrastructure inspection |
| ... | Traffic management | Lossless detection |
| | Agricultural production | Life science (respiration/motion) |
| | Robot | ... |
| | Uncrewed aerial vehicle | |
| | ... | |

As shown in Table 1, a sensing technology has three typical application scenarios: infrastructure, autonomous driving, and portable device. There are different types of sensing services in different application scenarios, and different types of sensing services correspond to different service requirements.

In the infrastructure scenario, a sensing function may be used to perform tasks such as security check and track management at an airport, perform tasks such as personnel counting and positioning at a factory, and perform tasks such as imaging and environment reconstruction in a building.

In the autonomous driving scenario, an autonomous driving device with a sensing function may be used to perform tasks such as posture recognition, in-vehicle behavior awareness, anti-collision sensing, traffic management, and pedestrian detection.

In the portable device scenario, an electronic device with a sensing function may be used to perform health detection, a riding helmet with a sensing function may be used to perform security prediction, and a detector with a sensing function may be used to perform life detection.

The foregoing sensing is widely defined as understanding and detecting objects and signals in space using electromagnetic waves, and may include meanings such as positioning, a radar, imaging, action recognition, object recognition, and environment reconstruction.

Currently, very limited spectrum resources may alternatively cause reuse of a same frequency for sensing and communication, requiring mutual coordination between a communication resource and a sensing resource. In a non-cooperation mode, sensing nodes do not communicate with each other and cannot learn resource usage of each other. However, in a cooperation mode, sensing nodes may communicate and coordinate with each other, to avoid reuse of a frequency resource and achieve an objective of reducing interference.

In a future network, there may be a case of converging a communication node and a sensing node with each other (referred to as an HCS node below), and there may be various HCS nodes of different integration types. The HCS node refers to integrated design of the communication node and the sensing node, and may implement an efficient design of communication and sensing by sharing some resources such as hardware resources, computing resources, space resources, time resources, and frequency resources, to reduce overheads such as power loss, site address, and costs.

For example, Table 2 provides an example of different integration types of HCS nodes according to this embodiment of this application.

**Table 2**

| | Integration type 1 | Integration type 2 | Integration type 3 |
|---|---|---|---|
| Shared content | Baseband hardware | Baseband hardware | Baseband hardware |
| | Radio frequency hardware | Radio frequency hardware | |
| | Time resource | | |
| | Spectrum resource | | |
| Exclusive content | Data processing | Data processing | Data processing |
| | | Time resource | Time resource |
| | | Spectrum resource | Spectrum resource |
| | | | Radio frequency hardware |

As shown in Table 2, there may be three different integration types of HCS nodes.

In the integration type 1, the HCS nodes may share a hardware resource, a radio frequency resource, a baseband resource, a time resource, a spectrum resource, and the like, but a communication signal and a sensing signal are separately processed. A joint waveform is used as an example. Advantages of the integration type include the ability to simultaneously transmit the communication signal and the sensing signal, as well as strong interference immunity.

In the integration type 2, the HCS nodes may share a radio frequency resource and a baseband resource. In this case, in addition to separate processing of a communication signal and a sensing signal, the communication signal and the sensing signal may be separately transmitted in a time division multiplexing mode or a frequency division multiplexing mode. A time division multiplexing waveform is used as an example. Advantages of the integration type include strong independence between the communication signal and the sensing signal, as well as small interference between a communication node and a sensing node.

In the integration type 3, the HCS nodes may share a baseband resource, and a communication signal and a sensing signal are transmitted by using respective resources in space domain, time domain, and frequency domain.

It should be understood that there may be another different integration type. This is not limited in embodiments of this application.

The resources (referred to as communication and sensing resources below) shared by the foregoing different types of HCS nodes correspond to different sensing performance. The sensing performance includes one or more of key performance indexes (key performance index, KPI) such as a sensing angle, a sensing distance, and sensing precision, and the sensing performance reflects different service requirements corresponding to sensing services of different types.

For example, Table 3 provides an example of sensing performance corresponding to different communication and sensing resources according to this embodiment of this application.

**Table 3**

| Communication and sensing resources | Space | Time | Frequency | Power |
|---|---|---|---|---|
| Sensing overheads | Quantity of beams | Length of a sensing symbol | Sensing bandwidth | Power of a sensing signal |
| Sensing performance | Range of a sensing angle | Sensing azimuth precision | Sensing range precision | Range of a sensing distance |

As shown in Table 3, the communication and sensing resources may include one or more of resources based on different dimensions such as a space dimension, a time dimension, a frequency dimension, and a power dimension. During transmission of a sensing signal, different sensing overheads are generated on sensing resources in different dimensions. The sensing overheads may include one or more of a quantity of beams, a quantity of antennas, a length of a sensing symbol, a period length, a bandwidth, transmit power, and a power loss.

For the communication and sensing resource in the space dimension, the sensing overheads may include a quantity of beams allocated to an HCS node, and sensing performance may be described by using the range of a sensing angle. Sensing services of different types require different ranges of sensing angles. For example, a sensing service of an anti-collision sensing type requires a small sensing angle, and a sensing service of a life rescue type requires a large sensing angle.

For the communication and sensing resource in the time dimension, the sensing overheads may include a length of a sensing symbol allocated to an HCS node, and sensing performance may be described by using the sensing azimuth precision. Sensing services of different types require different sensing azimuth precision. For example, a sensing service of a gesture recognition type based on a portable device requires medium sensing azimuth precision. A bending posture of each finger may be directly collected, and data normalization and smoothing processing are performed on temporal and spatial parameters of an orientation between two fingers.

For the communication and sensing resource in the frequency dimension, the sensing overheads may include a sensing bandwidth allocated to an HCS node, and sensing performance may be described by using the sensing range precision. Sensing services of different types require different sensing range precision. For example, a sensing service of an anti-collision type requires high sensing range precision, and a sensing service of a gesture recognition type requires medium sensing range precision.

For the communication and sensing resource in the power dimension, the sensing overheads may include power of a sensing signal allocated to an HCS node, and sensing performance may be described by using the range of a sensing distance. Sensing services of different types require different ranges of sensing distances. For example, a sensing service of a security check and intrusion detection type requires a medium range of a sensing distance, and a sensing service of an industrial and agricultural production type requires a long range of a sensing distance.

Sensing services of different types have different sensing performance requirements based on different priorities, and have different scheduling requirements for a resource management period and the like. For example, a required resource may be allocated to a high-priority service in real time, without having to wait until a resource management period arrives to allocate the resources.

For example, Table 4 provides an example of sensing performance corresponding to different priority-based sensing service types according to this embodiment of this application.

**Table 4**

| Service type | Priority | Sensing angle | Sensing distance | Sensing precision | Sensing reliability |
|---|---|---|---|---|---|
| Anti-collision sensing | High | Small | Short | High | High |
| Life rescue | High | Large | Long | Medium | High |
| Security check and intrusion detection | Medium | Large | Medium | Medium | High |
| Industrial and agricultural production | Medium | Large | Long | Medium | High |
| Gesture recognition | Low | Small | Short | Medium | Medium |
| Health management | Low | Small | Short | Medium | Medium |

As shown in Table 4, a sensing service of an anti-collision sensing type requires a large sensing range and high precision and reliability, and belongs to a high-priority service. A communication and sensing resource with a small sensing angle, a long sensing distance, and high sensing precision may be allocated to the sensing service of an anti-collision sensing type. A sensing service of a life rescue type also requires a large sensing range and high reliability, and also belongs to a high-priority service. A communication and sensing resource with a large sensing angle, a long sensing distance, and medium sensing precision may be allocated to the sensing service of a life rescue type.

A sensing service of a security check and intrusion detection type requires high reliability and other moderate sensing performance, and belongs to a medium-priority service. A communication and sensing resource with a large sensing angle, a medium sensing distance, and medium sensing precision may be allocated to the sensing service of a security check and intrusion detection type. A sensing service of an industrial and agricultural production type also requires high reliability, and belongs to a medium-priority service. A communication and sensing resource with a large sensing angle, a long sensing distance, and medium sensing precision may be allocated to the sensing service of an industrial and agricultural production type.

A sensing service of a gesture recognition type, a sensing service of a health management type, and a sensing service of a respiratory monitoring type require medium reliability, and belong to a low-priority service. Communication and sensing resources with a small sensing angle, a small sensing distance, and medium sensing precision may be allocated these sensing services.

These HCS services of different types require different communication and sensing resources. To meet requirements of both communication and sensing functions in a complex network, a network device need to be improved at a hardware layer and a software layer.

The following describes technical solutions of this application with reference to accompanying drawings.

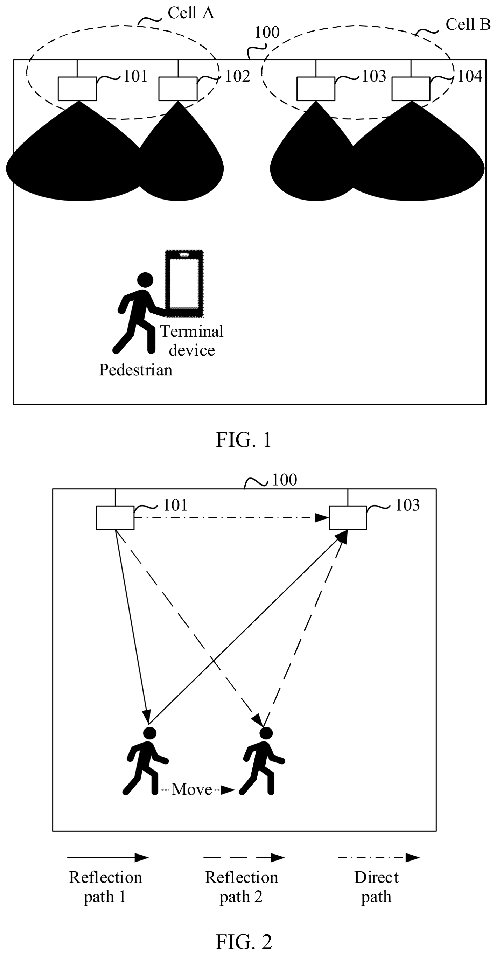

FIG. 1 is a diagram of an HCS service to which an embodiment of this application is applicable.

The HCS service shown in FIG. 1 is an indoor HCS service. A network device 101, a network device 102, a network device 103, and a network device 104 are installed on the roof. The network device 101 and the network device 102 form a cell A, and the network device 103 and the network device 104 form a cell B. These network devices can communicate with a terminal device by transmitting and receiving beams, and can sense a location and a moving speed of a pedestrian by transmitting and receiving the beams.

The network device in FIG. 1 may be one of the following devices: a macro base station in a universal mobile telecommunications system (universal mobile telecommunications system, UMTS) or LTE, a next generation NodeB (the next generation NodeB, gNB) in 5G, a micro base station in a heterogeneous network (heterogeneous network, HetNet), a radio frequency unit (remote radio unit, RRU) including an antenna in a distributed base station, an active antenna unit (active antenna unit, AAU), a pico (pico) cell, a home base station (femtocell), a low mobility (low mobility, LoMo) base station, a low power node (low power node, LPN), and a wireless access point (access point, AP). The network device in FIG. 1 may alternatively be a relay station, an access point, an in-vehicle device, a wearable device, or a base station in a future mobile communication system (for example, 6G) that functions as a base station. A specific type of the network device is not limited in embodiments of this application.

Communication between the network device and the terminal device is a communication function of the HCS service. A process in which the network device transmits a beam to a pedestrian and receives a beam reflected by the pedestrian is a sensing function of the HCS service.

In terms of the communication function, distributed multiple input multiple output (distributed multiple input multiple output, D-MIMO) is used to increase a capacity in a cell, and inter-cell interference needs to be reduced. Based on these requirements, a wide beam needs to be used in a cell, and a narrow beam needs to be used at an edge of the cell. In this way, when the terminal device is located in an overlapping region between beams of two network devices in the cell, joint processing of a plurality of network devices can be used to improve user experience. When the terminal device is located at a boundary of two cells, a narrow beam can reduce inter-cell interference.

In terms of the sensing function, a cooperation mode is used as an example. A narrow beam needs to be used between network devices to improve an antenna gain, and a wide beam needs to be used for a signal transmitted by a network device at a transmit end to the pedestrian, so that a network device at a receive end can receive a signal reflected by the pedestrian.

FIG. 2 is a diagram of a sensing scenario according to an embodiment of this application.

A network device 101 transmits a signal to a pedestrian by using a wide beam. The signal is received by a network device 103 after being reflected by the pedestrian. A path along which the signal arrives at the pedestrian from the network device 101 and then arrives at the network device 103 is referred to as a reflected path, and the signal may also be referred to as a reflected signal. As the pedestrian moves, there are a plurality of reflection paths among the network device 101, the network device 103, and the pedestrian. FIG. 2 shows an example of two reflection paths. The network device 103 may obtain, by using the reflected signal, information such as duration in which the reflected signal arrives at the network device 103 and a pitch angle of receiving the reflected signal.

The network device 101 transmits a signal to the network device 103 by using a narrow beam. The signal may be referred to as a direct signal, and a path along which the direct signal arrives at the network device 103 from the network device 101 is referred to as a direct path. The network device 103 may obtain, by using the direct signal, information such as duration in which the direct signal arrives at the network device 103. Based on the foregoing information, the network device 103 may obtain a sensing result such as a location and a speed of the pedestrian, and a distance from the pedestrian.

It can be learned from the foregoing examples that the network device needs to implement flexible beam configuration for both communication and sensing functions. However, the communication function and the sensing function have different requirements for beam configuration. For example, a good communication function can be implemented by using a small quantity of antennas, and a good sensing function usually requires a large quantity of antennas. In addition, the sensing function has a special requirement for setting an antenna spacing. For example, the sensing function requires setting the antenna spacing to a half wavelength, to implement a high angular resolution. Usually, only the communication function is considered for an existing network device. The good communication function (namely, a narrow beam communication function) requires a large-size antenna, but it is difficult to implement a half-wavelength spacing for the large-size antenna. Therefore, the existing network device has poor performance in the sensing function. In addition, in the existing network device, each antenna corresponds to at least one power divider and one phase shifter, and these components are large in size, making it difficult to set a spacing between antennas to the half wavelength. In this embodiment of this application, an antenna in an antenna module is still a wide-beam antenna, a phase modulation unit is a metasurface unit, and the wide-beam antenna is small in size, eliminating a need to use a power divider or a phase shifter for the metasurface unit. Based on the foregoing improvement, a spacing between two adjacent antennas can be set to one half of a target wavelength, so that both a requirement of the communication function for a narrow beam and a requirement of the sensing function for the antenna spacing can be met.

The following describes a network device that can meet requirements of both communication and sensing functions and that is provided in embodiments of this application.

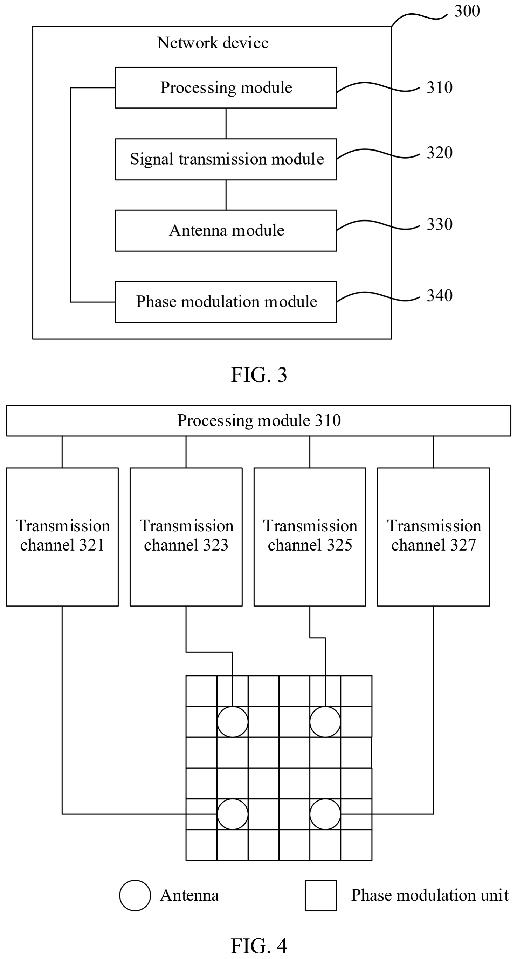

As shown in FIG. 3, the network device 300 includes a processing module 310, a signal transmission module 320, an antenna module 330, and a phase modulation module 340.

A first end of the signal transmission module 320 is electrically connected to the processing module 310, a second end of the signal transmission module 320 is electrically connected to the antenna module 330, the signal transmission module 320 is configured to transmit a signal sent by the processing module 310 to the antenna module 330, and the signal transmission module 320 is configured to transmit a signal received by the antenna module 330 to the processing module 310. The antenna module 330 includes M antennas, a spacing between two adjacent antennas in the M antennas is one half of a target wavelength, the target wavelength is a wavelength of signals transmitted through the M antennas, and the M antennas are arranged in a planar configuration, where M is a positive integer greater than or equal to 4. The phase modulation module 340 is electrically connected to the processing module 310, the phase modulation module 340 is located on a plane perpendicular to a radiation direction of the antenna module 330, the phase modulation module 340 includes a plurality of phase modulation units, the phase modulation unit is a metasurface unit, and the phase modulation module 340 is configured to modulate, based on a control signal of the processing module 310, a wavefront phase of signals transmitted or received through the M antennas.

Connection lines between the modules in FIG. 3 indicate electrical connections. A possible implementation of the network device 300 is shown in FIG. 4.

In FIG. 4, a transmission channel 321, a transmission channel 323, a transmission channel 325, and a transmission channel 327 are four submodules of the signal transmission module 320. Four circles respectively connected to the four transmission channels represent four antennas (M=4) of the antenna module 330, and each of the four antennas may be used for sensing or communication. The plurality of phase modulation units are disposed on the plane perpendicular to the radiation direction of the antenna. As shown in squares in FIG. 4, the plurality of phase modulation units form the phase modulation module 340. For brevity, an electrical connection between the phase modulation module 340 and the processing module 310 is not shown in FIG. 4.

The processing module 310 transfers an electrical signal carrying to-be-sent information to the four transmission channels in FIG. 4, and transfers the electrical signal to the four antennas through the four transmission channels. The antennas convert the electrical signal into an electromagnetic wave and radiate the electromagnetic wave by using the phase modulation unit. The phase modulation unit enters a transparent state or a wave-converging state based on the control signal of the processing module 310. When the phase modulation unit is in the transparent state, the phase modulation unit does not perform phase modulation processing on the electromagnetic wave, and a phase of the electromagnetic wave passing through the phase modulation unit remains unchanged. When the phase modulation unit is in the wave-converging state, the phase modulation unit performs phase modulation processing on a wavefront phase of the electromagnetic wave, and the wavefront phase of the electromagnetic wave passing through the phase modulation unit changes, that is, the electromagnetic wave changes from a wide beam to a narrow beam. The phase modulation unit may alternatively perform phase modulation on a wavefront phase of the received electromagnetic wave signal to change a width of a received beam.

The processing module 310 may be a field-programmable gate array (field-programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

Each submodule in the signal transmission module 320 may include a power amplifier (power amplifier, PA), a low noise amplifier (low noise amplifier, LNA), a switch, and a filter. The following describes a structure of the signal transmission module 320 in detail.

Each antenna in the antenna module 330 may be an antenna that supports switching between left-hand circular polarization and right-hand circular polarization, or may be an antenna that supports both left-hand circular polarization and right-hand circular polarization, or may be an antenna that supports linear polarization. For example, the antenna in the antenna module 330 may be a circularly polarized end-fire antenna, a linearly polarized end-fire antenna, a circularly polarized broadside antenna, or a linearly polarized broadside antenna. The antennas in the antenna module 330 may be the same or may be different.

The phase modulation unit in the phase modulation module 340 may include a metamaterial (metamaterial). The phase modulation module 340 including the metamaterial may also be referred to as a metasurface (metasurface) or a partially energy converging surface (partially energy converging surface, PECS). The phase modulation unit may be referred to as a metasurface unit or a PECS unit. In an optional example, the phase modulation unit may further include an adjustable element. The processing module 310 may adjust and control each phase modulation unit by using the adjustable element, so that a phase response of each phase modulation unit may change within a specific range (for example, 0 to 360 degrees). The adjustable element may be a positive intrinsic negative (positive intrinsic negative, PIN) diode, a varactor diode, or a micro-electro-mechanical system (micro-electro-mechanical system, MEMS) switch. A specific manner of adjusting and controlling the phase modulation unit is not limited in embodiments of this application.

In an existing network device, a plurality of wide-beam antennas are usually combined into one module by using a power divider to implement a narrow beam, or a large-size antenna is used to implement a narrow beam, making it difficult to set a spacing between antennas to a half wavelength. In this embodiment of this application, the phase modulation unit is a metasurface unit, eliminating a need to use a power divider or a phase shifter for the metasurface unit. In view of this, the spacing between two adjacent antennas can be set to one half of the target wavelength, so that both a requirement of the communication function for beam switching and a requirement of the sensing function for an antenna spacing can be met.

It should be noted that descriptions of the processing module 310, the signal transmission module 320, the antenna module 330, and the phase modulation module 340 are examples rather than limitations. Specific forms of the processing module 310, the signal transmission module 320, the antenna module 330, and the phase modulation module 340 are not limited in embodiments of this application. The signal transmission module 320 may include more or fewer submodules. The antenna module 330 may include more antennas, and an arrangement form of these antennas is not limited to the form shown in FIG. 4. A quantity and shapes of phase modulation units in the phase modulation module 340 are not limited to the quantity and shapes shown in FIG. 4.

The following describes several other network devices provided in embodiments of this application.

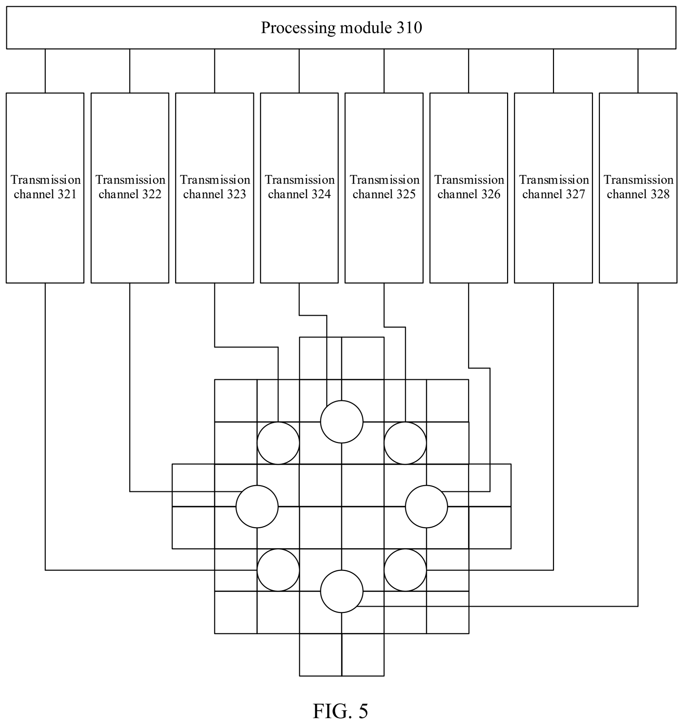

A possible implementation of the network device 300 is shown in FIG. 5. In FIG. 5, a transmission channel 321 to a transmission channel 328 are eight submodules of the signal transmission module 320. Eight circles respectively connected to the eight transmission channels represent eight antennas (M=8) of the antenna module 330. A plurality of phase modulation units are disposed on a plane perpendicular to a radiation direction of the antennas. As shown in squares in FIG. 5, the plurality of phase modulation units form the phase modulation module 340. For brevity, an electrical connection between the phase modulation module 340 and a processing module 310 is not shown in FIG. 5.

When the communication function needs to be used, the processing module 310 transfers an electrical signal carrying communication data to a sensing and communication antenna through the transmission channel 321, the transmission channel 323, the transmission channel 325, and the transmission channel 327, and the sensing and communication antenna converts the electrical signal into an electromagnetic wave and radiates the electromagnetic wave by using the phase modulation unit. The phase modulation unit enters a transparent state or a wave-converging state based on the control signal of the processing module 310. When the phase modulation unit is in the transparent state, the phase modulation unit does not perform phase modulation processing on the electromagnetic wave, and a phase of the electromagnetic wave passing through the phase modulation unit remains unchanged. When the phase modulation unit is in the wave-converging state, the phase modulation unit performs phase modulation processing on the electromagnetic wave, and a phase of the electromagnetic wave passing through the phase modulation unit changes, that is, the electromagnetic wave changes from a wide beam to a narrow beam.

When the sensing function needs to be used, the processing module 310 controls the phase modulation unit to enter the transparent state or the wave-converging state. When the phase modulation unit is in the transparent state, the phase modulation unit does not perform phase modulation processing on the electromagnetic wave, the phase of the electromagnetic wave passing through the phase modulation unit remains unchanged, and a sensing antenna or a sensing and communication antenna may receive a wide-beam electromagnetic wave. When the phase modulation unit is in the wave-converging state, the phase modulation unit performs phase modulation processing on the electromagnetic wave, the phase of the electromagnetic wave passing through the phase modulation unit changes, and a sensing antenna or a sensing and communication antenna may receive a narrow-beam electromagnetic wave.

Optionally, a quantity of transmission channels may be reduced by adding a switch. For example, the signal transmission module 320 includes N transmission channels and K switches, the N transmission channels are electrically connected to the processing module 310, K transmission channels in the N transmission channels are electrically connected to the K switches, and the K switches are electrically connected to P antennas in M antennas, where N, K, and P are all positive integers, N is greater than or equal to K, M is greater than or equal to P, and P is greater than K. The K switches are configured to switch a relationship of connection between the P antennas and the K transmission channels.

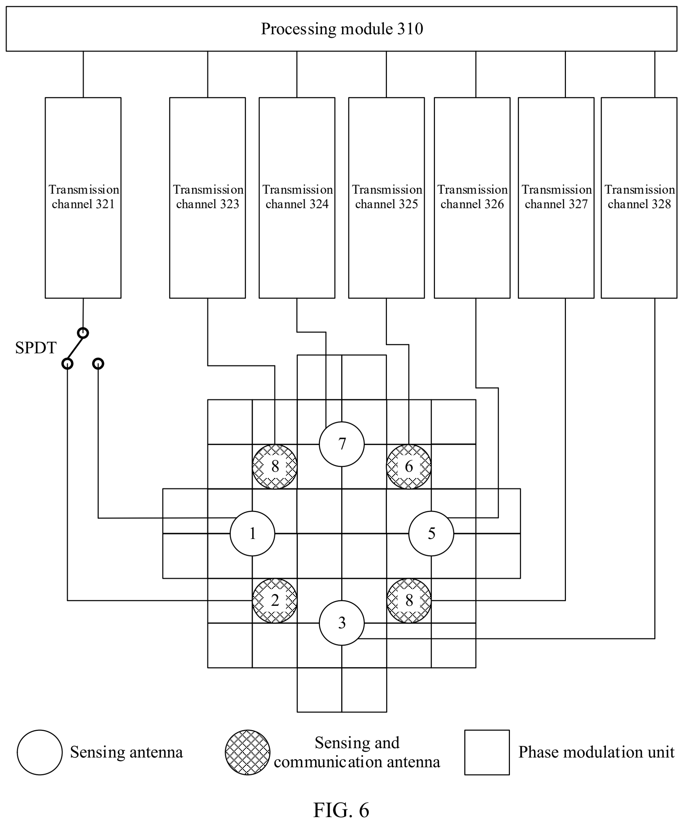

As shown in FIG. 6, the network device 300 includes seven transmission channels (N=7), eight antennas (M=8), and one single-pole double-throw (single pole double throw, SPDT) switch (K=1). The SPDT switch is connected to an antenna 1 and an antenna 2 (P=2). In the eight antennas shown in FIG. 6, four antennas are used for communication, and eight antennas are used for sensing. Therefore, the four antennas used only for sensing may be referred to as "sensing antennas", and the four antennas used for communication and sensing may be referred to as "sensing and communication antennas".

When the communication function needs to be used, the SPDT switch connects a transmission channel 321 to the antenna 2, and the processing module 310 transfers an electrical signal carrying communication data to a sensing and communication antenna through the transmission channel 321, a transmission channel 323, a transmission channel 325, and a transmission channel 327.

When the sensing function needs to be used, the SPDT switch connects the transmission channel 321 to the antenna 2, and the processing module 310 receives a sensing signal (a signal received through a sensing and communication antenna) through the transmission channel 321, the transmission channel 323, the transmission channel 325, and the transmission channel 327. Then, the SPDT switch is switched from the antenna 2 to the antenna 1, and connects the transmission channel 321 to the antenna 1, and the processing module 310 receives a sensing signal (a signal received through a sensing antenna) through the transmission channel 321, a transmission channel 324, a transmission channel 326, and a transmission channel 328.

Generally, the sensing function requires a receive end to simultaneously receive a plurality of sensing signals through a plurality of antennas, and the receive end performs positioning or other sensing processing based on a difference between different sensing signals. If a moving speed of a to-be-measured target is low, a location of the to-be-measured target almost does not change in a short time. Therefore, in a scenario of sensing a slowly-moving target, receiving sensing signals a plurality of times in a short time has little impact on the sensing function. Based on this principle, in this embodiment, the relationship of connection between the P antennas and the K transmission channels is switched by using the K switches, and the P antennas may receive sensing signals a plurality of times. This reduces a quantity of transmission channels without affecting sensing performance, thereby reducing costs of the network device.

In addition, in the network device shown in FIG. 6, the sensing and communication antenna are spaced apart from each other and the sensing antenna are spaced apart from each other. Compared with continuously disposing antennas, spacing the sensing and communication antennas apart from each other may increase a communication capacity.

The network device may reduce the quantity of transmission channels by using other types of switches in addition to the SPDT switch.

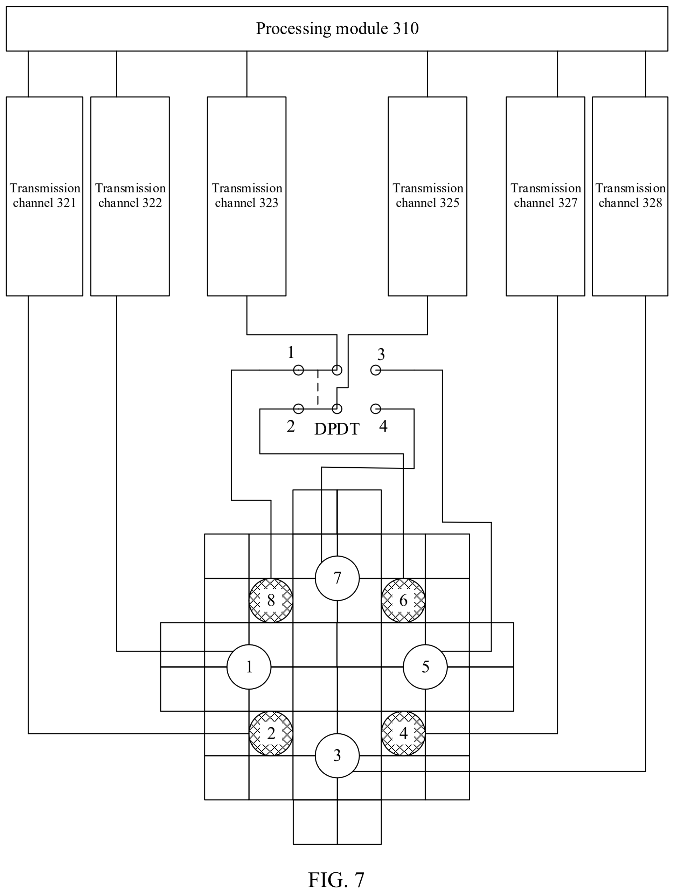

As shown in FIG. 7, the network device 300 includes six transmission channels (N=6), eight antennas (M=8), and one double-pole double-throw (double pole double throw, DPDT) switch (K=1). The DPDT switch includes four contacts: a contact 1, a contact 2, a contact 3, and a contact 4. The contact 1 is connected to an antenna 8, the contact 2 is connected to an antenna 6, the contact 3 is connected to an antenna 5, and the contact 4 is connected to an antenna 7. That is, P=4. The contact 1 and the contact 2 are a group of contacts, and the contact 3 and the contact 4 are another group of contacts. "Pole" of the DPDT switch may be switched between the two groups of contacts. The eight antennas shown in FIG. 7 are grouped into two sets: a sensing antenna set and a sensing and communication antenna set.

When the communication function needs to be used, the DPDT switch connects a transmission channel 323 to the antenna 8 and connects a transmission channel 325 to the antenna 6, and the processing module 310 transfers an electrical signal carrying communication data to the sensing and communication antenna through a transmission channel 321, the transmission channel 323, the transmission channel 325, and a transmission channel 327.

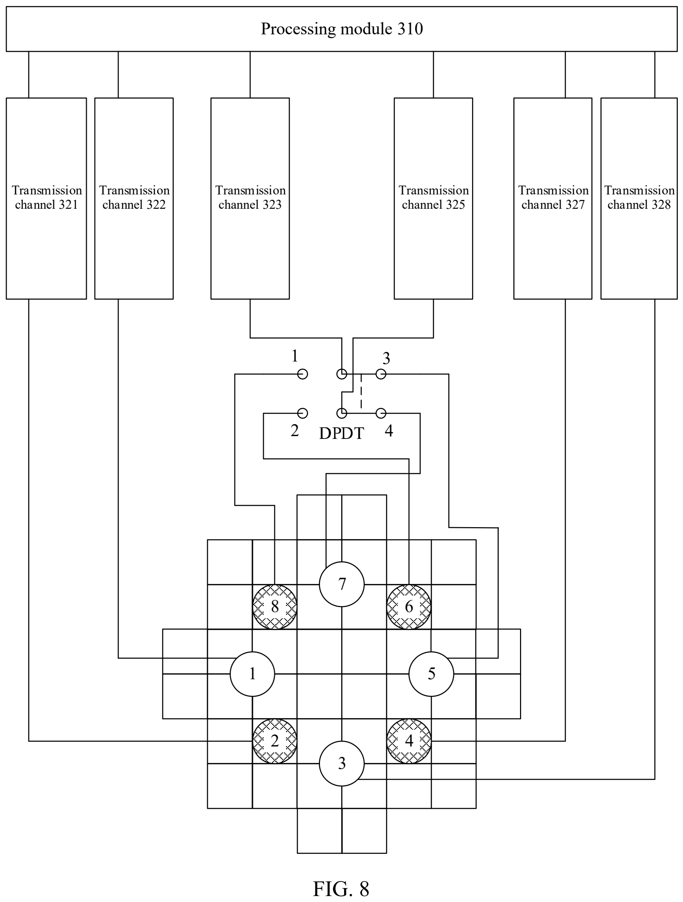

When the sensing function needs to be used, the DPDT switch connects the transmission channel 323 to the antenna 8 and connects the transmission channel 325 to the antenna 6, and the processing module 310 receives a sensing signal (a signal received through the sensing and communication antenna) through the transmission channel 321, the transmission channel 323, the transmission channel 325, and the transmission channel 327. Then, "pole" of the DPDT switch is switched from the contact 1 and the contact 2 to the contact 3 and the contact 4 to connect the transmission channel 323 to the antenna 5 and connect the transmission channel 325 to the antenna 7, and the processing module 310 receives a sensing signal (a signal received through the sensing antenna) through the transmission channel 322, the transmission channel 323, the transmission channel 325, and a transmission channel 328, as shown in FIG. 8.

Types and a quantity of switches used by the network device 300 are not limited in embodiments of this application.

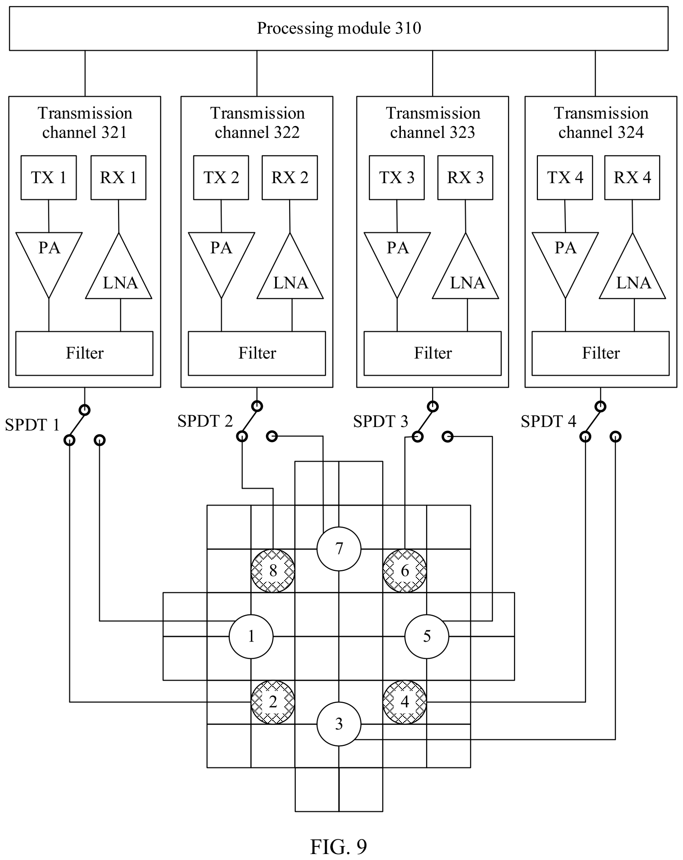

FIG. 9 is a diagram of a network device including a plurality of SPDT switches according to an embodiment of this application.

As shown in FIG. 9, the network device 300 includes four transmission channels (N=4), eight antennas (M=8), and four SPDT switches (K=4). The four SPDT switches are an SPDT 1, an SPDT 2, an SPDT 3, and an SPDT 4 respectively. The eight antennas shown in FIG. 9 are grouped into two sets: a sensing antenna set and a sensing and communication antenna set.

When the communication function needs to be used, the SPDT 1 connects a transmission channel 321 to an antenna 2, the SPDT 2 connects a transmission channel 322 to an antenna 8, the SPDT 3 connects a transmission channel 323 to an antenna 6, and the SPDT 4 connects a transmission channel 324 to an antenna 4, so that the processing module 310 transfers an electrical signal carrying communication data to a sensing and communication antenna through the transmission channel 321, the transmission channel 322, the transmission channel 323, and the transmission channel 324.

When the sensing function needs to be used, the SPDT 1 connects the transmission channel 321 to the antenna 2, the SPDT 2 connects the transmission channel 322 to the antenna 8, the SPDT 3 connects the transmission channel 323 to the antenna 6, and the SPDT 4 connects the transmission channel 324 to the antenna 4, so that the processing module 310 receives a sensing signal through the antenna 2, the antenna 8, the antenna 6, and the antenna 4. Then, the SPDT 1 is switched from the antenna 2 to an antenna 1, the SPDT 2 is switched from the antenna 8 to an antenna 7, the SPDT 3 is switched from the antenna 6 to an antenna 5, and the SPDT 4 is switched from the antenna 4 to an antenna 3, so that the processing module 310 receives the sensing signal through the antenna 1, the antenna 7, the antenna 5, and the antenna 3.

FIG. 9 further shows a possible structure of a transmission channel. The transmission channel 321 is used as an example. The transmission channel 321 includes a filter, a PA, an LNA, a transmission module (TX) 1, and a receiving module (RX) 1. The TX 1 may include a digital-to-analog converter (digital-to-analog converter, DAC). The RX 1 may include an analog-to-digital converter (analog-to-digital converter, ADC). The transmission channel 321 may further include more components. Types and a quantity of components included in the transmission channel are not limited in embodiments of this application.

For the network device 300 shown in FIG. 9, through switching of four single-pole double-throw switches, the network device 300 can complete reception of the sensing signal by performing receiving twice. This can reduce a time difference between different sensing signals, and thus reduce a negative impact of receiving the sensing signal in batches on the sensing function.

The foregoing describes in detail a structure of the network device 300, and the following describes an operating procedure of the phase modulation module 340.

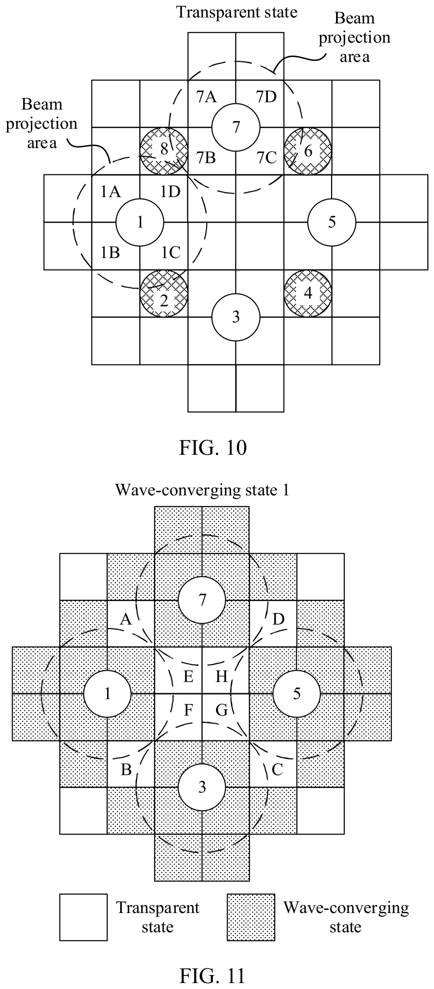

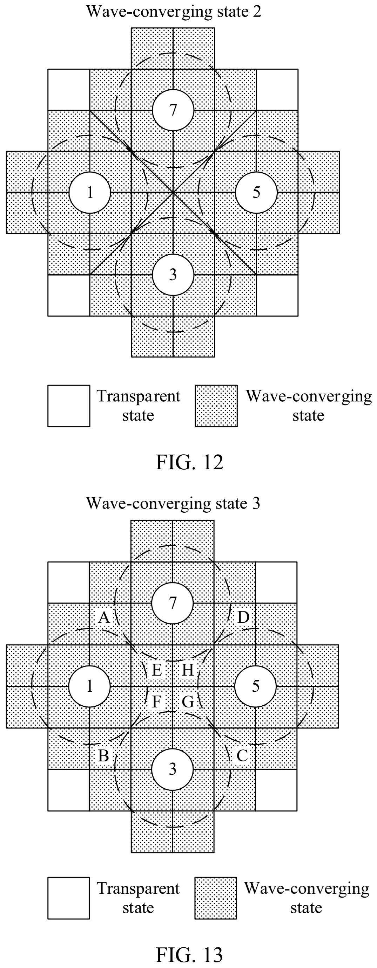

The network device 300 shown in FIG. 9 is used as an example. The phase modulation module 340 may be configured in three states: a transparent state shown in FIG. 10, a wave-converging state 1 shown in FIG. 11, and a wave-converging state 2 shown in FIG. 12.

When a sensing antenna or a sensing and communication antenna needs to operate in a wide beam state, the processing module 310 may configure all PECS units of the phase modulation module 340 to be in the transparent state. As shown in FIG. 10, for the PECS units in the transparent state, phase processing is not performed on a transmitted beam and a received beam. In this case, wide beams transmitted through the eight antennas continue to be transmitted in the form of a wide beam after passing through the PECS units, and received beams that pass through the PECS units are also received through the eight antennas in the form of a wide beam.

In FIG. 10, a PECS unit covered by a projection of a beam transmitted through each antenna on a PECS is referred to as a projection unit. For example, for the antenna 1, a projection (as shown in areas in dashed lines) of a beam transmitted through the antenna 1 on a PECS covers 12 PECS units: 1A, 1B, 1C, 1D, and 8 PECS units adjacent to the 4 PECS units, where the 12 PECS units are projection units of the antenna 1. For the antenna 7, a projection (as shown in areas in dashed lines) of a beam transmitted through the antenna 7 on a PECS covers 12 PECS units: 7A, 7B, 7C, 7D, and 8 PECS units adjacent to the 4 PECS units, where the 12 PECS units are projection units of the antenna 7. Definitions of projection units of other antennas are similar to definitions of the projection units of the antenna 1 and the antenna 7. The definitions herein are used in the following descriptions of the projection units, and details are not described again.

Because beams of different antennas may have different phase modulation requirements, disposing different phase modulation unit sets for the different antennas may meet the phase modulation requirements of the different antennas.

A beam projection area in FIG. 10 may be a projection area corresponding to a beam width of 2 dB, 3 dB, or 5 dB. It should be noted that a larger value of the beam width indicates a larger size of the projection area, and a smaller value of the beam width indicates a smaller size of the projection area. A proper value of the beam width may be selected according to an actual situation. In addition, the beam projection area may be a circle shown in FIG. 10, or may be an ellipse or an irregular shape. A scope and a shape of the beam projection area are not limited in embodiments of this application.

When a sensing antenna needs to operate in a narrow beam state, a PECS unit set (namely, a phase modulation unit set) corresponding to each sensing antenna is configured to be in a wave-converging state. As shown in FIG. 11, the antenna 1 and the antenna 7 are used as an example. Both a beam projection area of the antenna 1 and a beam projection area of the antenna 7 cover the 12 PECS units, where PECS units A and E are covered by the beam projection area of the antenna 1 and the beam projection area of the antenna 7, and the two PECS units may be referred to as shared PECS units (namely, shared phase modulation units). The shared PECS unit needs to process signals of a plurality of antennas. However, signals of different antennas may require different phase modulation amounts. Therefore, the shared PECS unit may not be able to meet phase modulation requirements of a plurality of antennas at the same time.

The following describes several solutions provided in embodiments of this application.

Solution 1: A shared PECS unit is excluded during division into a PECS unit set, so that each PECS unit set may focus on processing a signal of one antenna.

As shown in FIG. 11, in the beam projection area of the antenna 1, PECS units A, E, F, and B are shared PECS units. When a PECS unit set of the antenna 1 is obtained through division, the 4 PECS units are excluded, and the remaining 8 PECS units (as shown by the 8 shadow blocks in the dashed circles) in the beam projection area of the antenna 1 are used as the PECS unit set corresponding to the antenna 1, that is, wavefront phases of signals received by the PECS units A, E, F, and B are not modulated. Similarly, when a PECS unit set of the antenna 7 is obtained through division, PECS units A, E, H, and D are excluded, and the remaining 8 PECS units in the beam projection area of the antenna 7 are used as the PECS unit set corresponding to the antenna 7, that is, wavefront phases of signals received by the PECS units A, E, H, and D are not modulated. In this way, the PECS unit set corresponding to the antenna 1 needs to process only a signal of the antenna 1, and the PECS unit set corresponding to the antenna 7 needs to process only a signal of the antenna 7. This reduces configuration complexity of a phase modulation unit set.

Similarly, PECS units D, H, G, and C are all shared PECS units. When a PECS unit set corresponding to the antenna 3 and a PECS unit set corresponding to the antenna 5 are defined, the PECS units D, H, G, and C may be excluded.

Solution 2: Shared PECS units are split.

As shown in FIG. 12, PECS units A, B, C, D, E, F, G, and H are split. In this way, PECS units covered by beam projection areas of all antennas no longer have a common part, that is, PECS unit sets of all the antennas do not include a shared PECS unit, and the PECS unit set of each antenna needs to process only a signal of a single antenna. This reduces configuration complexity of a phase modulation unit set.

Solution 3: When a PECS unit set is obtained through division, a shared PECS unit is not excluded, but a phase modulation amount of the shared PECS unit is specially configured.

As shown in FIG. 13, both a PECS unit set of the antenna 1 and a PECS unit set of the antenna 7 include 12 PECS units covered by respective beam projection areas, the two PECS unit sets have shared PECS units A and E, a phase modulation requirement of the antenna 1 is a, and a phase modulation requirement of the antenna 2 is b. In this case, phase modulation amounts of the shared phase modulation units A and E may be configured as amounts related to a and b, for example, (a+b)/2, so that phase modulation requirements of different antennas can be met as much as possible.

Similarly, phase modulation amounts of shared phase modulation units B and F may be configured as values related to phase modulation requirements of the antenna 1 and the antenna 3, phase modulation amounts of shared phase modulation units G and C may be configured as values related to phase modulation requirements of the antenna 3 and the antenna 5, and phase modulation amounts of shared phase modulation units D and H may be configured as values related to phase modulation requirements of the antenna 5 and the antenna 7.

Compared with the solution 2, the solution 3 does not require additional processing on a phase modulation unit at a boundary, so that manufacturing difficulty and manufacturing costs of the phase modulation module can be reduced.

After PECS unit sets corresponding to all sensing antennas are determined, these PECS unit sets may be configured to be in the wave-converging state, so that the sensing antennas receive or send narrow-beam sensing signals.

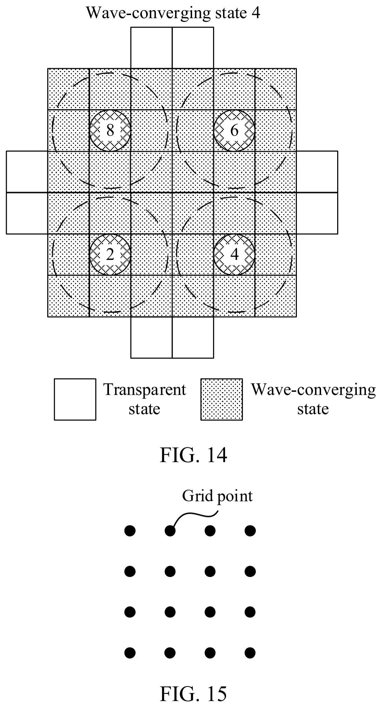

When a sensing and communication antenna needs to operate in the narrow beam state, a PECS unit set corresponding to each sensing and communication antenna is configured to be in the wave-converging state. As shown in FIG. 14, the antenna 8 is used as an example. A beam projection area of the antenna 8 covers nine PECS units. In this case, a PECS unit set corresponding to the antenna 8 includes the nine PECS units.

Similarly, beam projection areas of the antenna 2, the antenna 4, and the antenna 6 all cover nine PECS units, and PECS unit sets corresponding to the antenna 2, the antenna 4, and the antenna 6 are all nine PECS units in respective beam projection areas.

Different from the sensing antenna, there is no shared PECS unit in PECS unit sets of adjacent communication antennas. Therefore, a PECS unit set of each communication antenna needs to process only a signal of a single antenna. It should be noted that, due to a value factor of the beam width, beam projection areas of adjacent communication antennas in FIG. 14 do not overlap. If a value of the beam width is increased (for example, switched from 3 dB to 5 dB), the beam projection areas of the adjacent communication antennas may overlap, that is, PECS unit sets of the adjacent communication antennas have a shared PECS unit. In this case, a phase modulation problem of the shared PECS unit may be resolved by using any one of the foregoing three solutions.

After the PECS unit sets corresponding to all the sensing and communication antennas are determined, these PECS unit sets may be configured to be in the wave-converging state, so that the sensing and communication antennas receive or send narrow beam signals.

The PECS units mentioned above are all rectangular units or triangular units. Optionally, the PECS units may alternatively be in other shapes, for example, a circle, an ellipse, a pentagon, a hexagon, a five-fold cross, a grid square ring, a dipole, an intersecting cross, or a trident. A specific shape of the PECS unit is not limited in embodiments of this application.

A shape of a beam projection is described by using a circle as an example. Actually, shapes of beam projections vary with different antennas. Beam projections of some antennas may be elliptical or irregular, and PECS unit sets of different shapes need to be adapted. An arrangement manner of the PECS units on a plane is not limited in embodiments of this application.

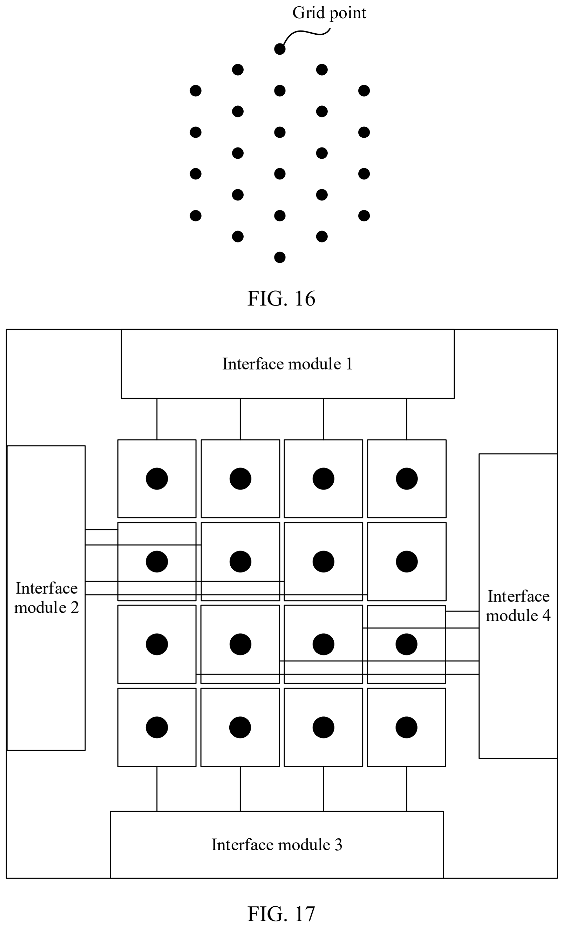

FIG. 15 and FIG. 16 respectively show two arrangement manners of PECS units. In FIG. 15, PECS units are arranged in the form of rectangular grids. In FIG. 16, PECS units are arranged in the form of triangular grids. A plane bearing a PECS unit may be a printed circuit board (printed circuit board, PCB), and a PECS unit disposed at each grid point on the PCB may be of any shape. It should be noted that the grid points shown in FIG. 15 and FIG. 16 are abstract concepts of locations at which the PECS units are disposed, and do not necessarily indicate that these point-shaped structures exist on the PCB.

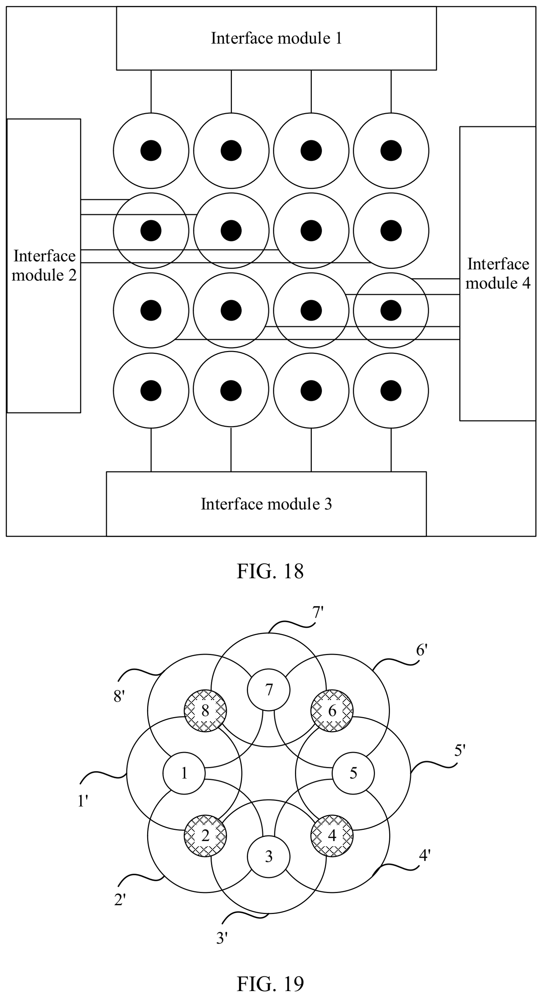

A rectangular grid is used as an example. FIG. 17 and FIG. 18 show two PECS unit shapes corresponding to the rectangular grid. In FIG. 17, each PECS unit is a rectangle and is connected to an interface module through a wire. In FIG. 18, each PECS unit is a circle and is connected to an interface module through a wire. Each of the foregoing interface modules may be connected to the processing module 310, and configure a phase modulation amount of each PECS unit based on a control signal of the processing module 310.

It can be learned from FIG. 15 and FIG. 16 that, PECS units arranged in grids may form phase modulation unit sets of different shapes, to flexibly adapt to shapes of beam projections of different antennas.

The foregoing describes an example of a structure of the phase modulation module 340. The following describes an operating procedure of the phase modulation module 340 with reference to FIG. 19 to FIG. 21.

As shown in FIG. 19, in the phase modulation module 340, each PECS unit set corresponds to one antenna. For example, a PECS unit set 1' corresponds to the antenna 1, and a PECS unit set 2' corresponds to the antenna 2. These PECS unit sets may be disposed on one plane, or may be disposed on more planes.

Four PECS unit sets (the PECS unit set 1', a PECS unit set 3', a PECS unit set 5', and a PECS unit set 7') corresponding to four sensing antennas do not include a shared PECS unit, and four PECS unit sets (the PECS unit set 2', a PECS unit set 4', a PECS unit set 6', and a PECS unit set 8') corresponding to four sensing and communication antennas do not include a shared PECS unit either.

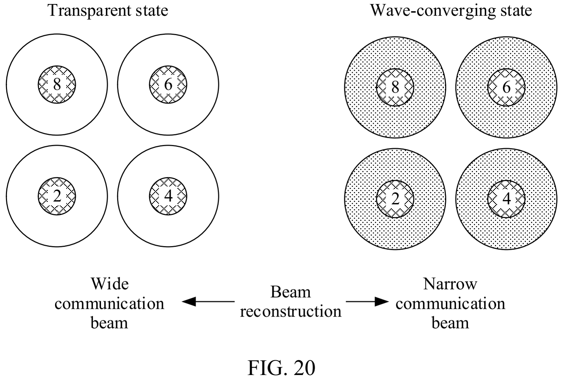

When a sensing and communication antenna needs to be switched between a wide beam state and a narrow beam state, the processing module 310 may configure each PECS unit set in a manner shown in FIG. 20.

As shown in FIG. 20, when the PECS unit set 2', the PECS unit set 4', the PECS unit set 6', and the PECS unit set 8' are configured to be in a transparent state, the PECS unit set 1', the PECS unit set 3', the PECS unit set 5', and the PECS unit set 7' are all configured to be in a transparent state (for brevity, the four PECS unit sets are not shown in FIG. 20). In this case, beams received and sent through the antenna 2, the antenna 4, the antenna 6, and the antenna 8 are all wide beams. When the PECS unit set 2', the PECS unit set 4', the PECS unit set 6', and the PECS unit set 8' are configured to be in a wave-converging state, the PECS unit set 1', the PECS unit set 3', the PECS unit set 5', and the PECS unit set 7' are still configured to be in a transparent state. In this case, beams received and sent through the antenna 2, the antenna 4, the antenna 6, and the antenna 8 are all narrow beams. The processing module 310 may complete switching between a wide communication beam and a narrow communication beam in a manner shown in FIG. 20, that is, complete beam reconstruction.

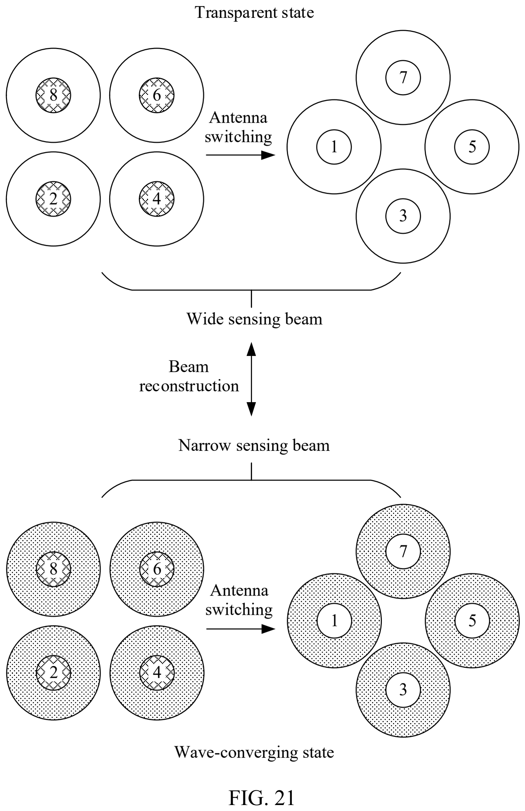

When a sensing antenna and a sensing and communication antenna need to be switched between a wide beam state and a narrow beam state, the processing module 310 may configure each PECS unit set in a manner shown in FIG. 21.

As shown in FIG. 21, when the PECS unit set 2', the PECS unit set 4', the PECS unit set 6', and the PECS unit set 8' are configured to be in a transparent state, the PECS unit set 1', the PECS unit set 3', the PECS unit set 5', and the PECS unit set 7' are all configured to be in a transparent state. In this case, beams received and sent through the antenna 2, the antenna 4, the antenna 6, and the antenna 8 are all wide sensing beams. Then, the network device 300 may switch four SPDT switches shown in FIG. 9, and receive the sensing signal through the antenna 1, the antenna 3, the antenna 5, and the antenna 7. In this case, the PECS unit set 1' to the PECS unit set 8' are still configured to be in the transparent state, and beams received and sent through the antenna 1, the antenna 3, the antenna 5, and the antenna 7 are all wide sensing beams.

When the PECS unit set 2', the PECS unit set 4', the PECS unit set 6', and the PECS unit set 8' are configured to be in a wave-converging state, the PECS unit set 1', the PECS unit set 3', the PECS unit set 5', and the PECS unit set 7' are all configured to be in a transparent state. In this case, beams received and sent through the antenna 2, the antenna 4, the antenna 6, and the antenna 8 are all narrow sensing beams. Then, the network device 300 may switch four SPDT switches shown in FIG. 9, and receive the sensing signal through the antenna 1, the antenna 3, the antenna 5, and the antenna 7. The PECS unit set 1', the PECS unit set 3', the PECS unit set 5', and the PECS unit set 7' are configured to be in a wave-converging state, and the PECS unit set 2', the PECS unit set 4', the PECS unit set 6', and the PECS unit set 8' are all configured to be in a transparent state. In this case, beams received and sent through the antenna 1, the antenna 3, the antenna 5, and the antenna 7 are all sensing narrow beams.

The processing module 310 may complete switching between a wide sensing beam and a narrow sensing beam in a manner shown in FIG. 21, that is, complete beam reconstruction.

In the foregoing network devices, antenna arrays are arranged in a circular distribution, and a circularly distributed antenna array has balanced performance in each azimuth, and can provide a 360° ambiguity-free sensing function. However, the antenna array applicable to this application may alternatively be distributed in another shape.

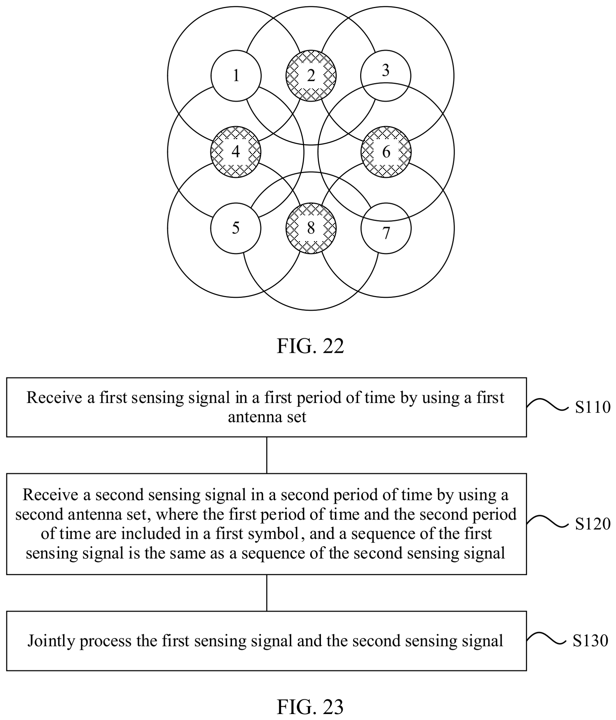

As shown in FIG. 22, eight antennas are distributed in a rectangular shape. For a process of performing beam reconstruction by the network device 300, refer to FIG. 20 and FIG. 21.

The foregoing describes in detail an architecture and an operating procedure of the network device provided in embodiments of this application. The following describes a sensing signal processing method provided in this application. The method is applied to a network device having the following structure.

The network device includes a processing module, a signal transmission module, an antenna module, and a phase modulation module. A first end of the signal transmission module is electrically connected to the processing module, a second end of the signal transmission module is electrically connected to the antenna module, the signal transmission module is configured to transmit a signal sent by the processing module to the antenna module, and the signal transmission module is configured to transmit a signal received by the antenna module to the processing module. The antenna module includes M antennas, a spacing between two adjacent antennas in the M antennas is one half of a target wavelength, the target wavelength is a wavelength of signals transmitted through the M antennas, and the M antennas are arranged in a planar configuration, where M is a positive integer greater than or equal to 4. The phase modulation module is electrically connected to the processing module, the phase modulation module is located on a plane perpendicular to a radiation direction of the antenna module, the phase modulation module includes a plurality of phase modulation units, the phase modulation unit is a metasurface unit, and the phase modulation module is configured to modulate, based on a control signal of the processing module, a wavefront phase of signals transmitted or received through the M antennas.

The signal transmission module includes N transmission channels and K switches, the N transmission channels are electrically connected to the processing module, K transmission channels in the N transmission channels are electrically connected to the K switches, and the K switches are electrically connected to P antennas in the M antennas, where N, K, and P are all positive integers, N is greater than or equal to K, M is greater than or equal to P, and P is greater than K. The P antennas include a first antenna set and a second antenna set. The K switches are configured to switch a relationship of connection between the first antenna set and the second antenna set, and the K transmission channels.

As shown in FIG. 23, the method includes the following steps.

S110: Receive a first sensing signal in a first period of time by using the first antenna set.

S120: Receive a second sensing signal in a second period of time by using the second antenna set, where the first period of time and the second period of time are included in a first symbol, and a sequence of the first sensing signal is the same as a sequence of the second sensing signal.

S130: Jointly process the first sensing signal and the second sensing signal.

A network device applicable to the method is shown in FIG. 9. The first antenna set may include an antenna 1, an antenna 3, an antenna 5, and an antenna 7, and the second antenna set may include an antenna 2, an antenna 4, an antenna 6, and an antenna 8. The network device shown in FIG. 9 may receive the first sensing signal and the second sensing signal respectively by switching four SPDT switches.

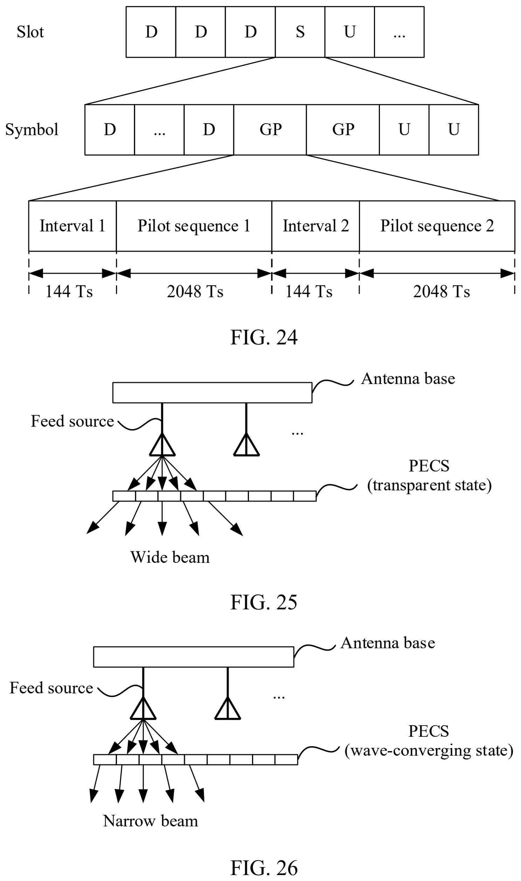

A structure of a time domain resource used by the network device is shown in FIG. 24. The time domain resource includes a plurality of slots, and each slot may be configured for a different purpose. For example, a D slot represents a downlink slot for transmitting downlink data, a U slot represents an uplink slot for transmitting uplink data, and an S slot represents a flexible slot and may be configured in a plurality of forms. For example, the S slot may be configured in a form shown in FIG. 24, where an interval 1 and an interval 2 may be a cyclic prefix (cyclic prefix, CP).

The first symbol may be a symbol in a downlink slot, or may be a symbol in an uplink slot, or may be a symbol in a flexible slot. In one symbol, the network device may receive a sensing signal twice or more times. For example, when the network device is configured with a single-pole triple-throw switch, the network device may receive the sensing signal three times.

A frequency domain of the first sensing signal and a frequency domain of the second sensing signal each are a comb frequency domain. The comb frequency domain can enable a time domain of the first sensing signal to be repeated with a time domain of the second sensing signal. Time domain repetition means that a time domain sequence of the first sensing signal is the same as a time domain sequence of the second sensing signal, that is, a pilot sequence 1 and a pilot sequence 2 in FIG. 24 are the same.

For example, the first sensing signal and the second sensing signal use only subcarriers whose indexes are even or odd numbers. In this way, time domain sequences of the first sensing signal and the second sensing signal may be repeated, that is, a difference between a phase of the first sensing signal and a phase of the second sensing signal is 0 or π. Channels of sensing signals repeated in the time domain sequence are highly correlated, so that a performance loss caused by jointly processing the first sensing signal and the second sensing signal can be reduced. In addition, a design of sensing signals with repeated time domain sequences allows the receive end to perform channel estimation by using a part of the sensing signal (for example, the first sensing signal). This reduces scanning time overheads of the sensing signal.

Optionally, duration of the interval 1 and the interval 2 in FIG. 24 is 144 Ts, duration of the pilot sequence 1 and the pilot sequence 2 is 2048 Ts, Ts is a time unit, and a value of Ts may be 8.138 nanoseconds (ns).

In 5G, when a subcarrier spacing is 15 kHz, duration of one symbol is approximately 66.67 microseconds (µs). When a subcarrier spacing is greater than 15 kHz, duration of one symbol is less than 66.67 µs. Therefore, in a scenario of sensing a slowly-moving target, receiving a sensing signal a plurality of times in one symbol has little impact on a sensing function. That the network device jointly processes the first sensing signal and the second sensing signal means that the network device processes eight sensing signals simultaneously, and an antenna array is also an 8-element circular array with a spacing of half a wavelength (which can improve an angular resolution of sensing). Based on this principle, in this embodiment, a relationship of connection between the P antennas and the K transmission channels is switched by using the K switches, and the P antennas may receive a plurality of sensing signal a plurality of times and jointly process the plurality of sensing signal. This reduces a quantity of transmission channels without affecting sensing performance, thereby reducing costs of the network device.

Optionally, the first symbol is a guard period (guard period, GP) between an uplink symbol and a downlink symbol.

As shown in FIG. 24, a ratio of a D symbol to a GP symbol to a U symbol is 10:2:2. If duration of each symbol is 0.5 millisecond (ms), it may be calculated that time occupied by the GP symbol is approximately 70 µs. Because the network device usually does not transmit service data within the guard period, receiving the sensing signal within the guard period can avoid a negative impact caused by the sensing function on a communication function.

FIG. 25 and FIG. 26 are effect diagrams obtained by using the network device and/or the sensing signal processing method provided in embodiments of this application. FIG. 25 and FIG. 26 show only an antenna base, a feed source, and a PECS of the network device. For brevity, other parts are not shown in the figures.

In FIG. 25, the PECS is configured to be in a transparent state, and after a wide beam radiated by an antenna passes through the PECS, a beam width remains unchanged, and the wide beam is still radiated in the form of a wide beam.

In FIG. 26, the PECS is configured to be in a wave-converging state, and after a wide beam radiated by an antenna passes through the PECS, a beam width changes, and the wide beam is radiated in the form of a narrow beam.

An effect of receiving a beam is similar to that of transmitting a beam, and details are not described again.

The following describes a communication system provided in this application.

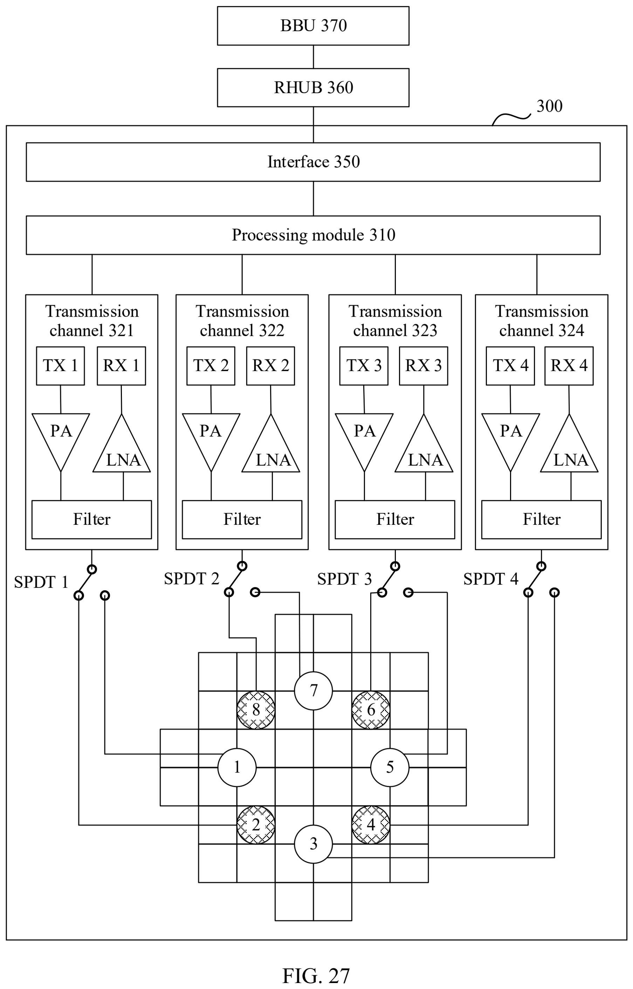

As shown in FIG. 27, the communication system includes a network device 300, a remote hub (remote hub, RHUB) 360, and a baseband unit (baseband unit, BBU) 370. The network device 300 may be connected to the RHUB 360 through a jumper (for example, a network cable or an optical fiber), and the RHUB 360 may be connected to the BBU 370 through an optical fiber. The network device 300 may be deployed indoors in a ceiling-mounted manner, a wall-mounted manner, or the like, and the RHUB 360 and the BBU 370 may be deployed in an equipment room.

When the communication system needs to send communication data, the BBU 370 obtains the communication data from a core network, and transmits the communication data to the network device 300 by using the RHUB 360. The network device 300 obtains the communication data through an interface 350. A processing module 310 selects a matched sending policy based on a requirement of the communication data, for example, sends the communication data through four sensing and communication antennas, configures PECS unit sets corresponding to the four sensing and communication antennas to be in a wave-converging state, and sends the communication data by using a narrow beam.

When the communication system needs to receive communication data, the processing module 310 selects a matched receiving policy based on a requirement of the communication data, for example, receives the communication data through four sensing and communication antennas, configures PECS unit sets corresponding to the four sensing and communication antennas to be in a transparent state, and receives the communication data by using a wide beam. Then, the communication data received through the antennas arrives at the processing module 310 through transmission channels. The processing module 310 transmits the communication data to the RHUB 360 through the interface 350. The RHUB 360 transmits the communication data to the BBU 370. The BBU 370 further transmits the communication data to the core network.

When the communication system needs to send sensing data, the BBU 370 obtains the sensing data from the core network, and transmits the sensing data to the network device 300 by using the RHUB 360. The network device 300 obtains the sensing data through the interface 350. The processing module 310 selects a matched sending policy based on a requirement of the communication data, for example, sends the sensing data through eight antennas (four sensing antennas and four sensing and communication antennas), configures PECS unit sets corresponding to the eight antennas to be in a transparent state, and sends the sensing data by using a wide beam.

When the communication system needs to receive sensing data, the processing module 310 selects a matched receiving policy based on a requirement of the sensing data, for example, receives the sensing data through eight antennas, configures PECS unit sets corresponding to the eight antennas to be in a wave-converging state, and receives the sensing data by using a narrow beam. Then, the sensing data received through the antennas arrives at the processing module 310 through transmission channels. The processing module 310 transmits the sensing data to the RHUB 360 through the interface 350. The RHUB 360 transmits the sensing data to the BBU 370. The BBU 370 further transmits the sensing data to the core network.

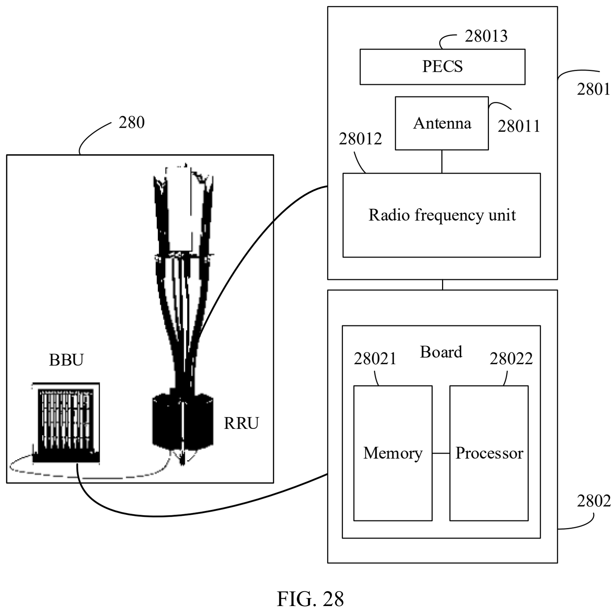

FIG. 28 is a diagram of a structure of another communication system according to this application. As shown in FIG. 28, the communication system may also be referred to as a base station 280. The base station 280 may include one or more radio frequency units, for example, an RRU 2801 and one or more BBUs 2802. The RRU 2801 is an example of the network device described above, and the BBU may also be referred to as a digital unit (digital unit, DU). The RRU 2801 may be referred to as a transceiver unit, a transceiver machine, a transceiver circuit, a transceiver, or the like. The RRU 2801 may include at least one antenna 28011, at least one radio frequency unit 28012, and at least one PECS 28013. The RRU including an antenna may also be referred to as an AAU. The RRU 2801 is mainly configured to: receive and transmit a radio frequency signal, and perform conversion between the radio frequency signal and a baseband signal. The BBU 2802 is mainly configured to perform baseband processing, control a base station, and the like. The RRU 2801 and the BBU 2802 may be physically disposed together, or may be physically disposed in a separate manner, that is, a distributed base station.

As a control center of the base station, the BBU 2802 may also be referred to as a processing unit, and is mainly configured to implement baseband processing functions such as channel coding, multiplexing, modulation, and spectrum spreading. For example, the BBU 2802 may be configured to control the base station to perform an operation procedure related to the network device in the foregoing method embodiments.

In an embodiment, the BBU 2802 may include one board or a plurality of boards, and the plurality of boards may jointly support a radio access network (for example, an NR network) of a single access indication, or may separately support radio access networks (for example, an LTE network, an NR network, or another network) of different access standards. The BBU 2802 further includes a memory 28021 and a processor 28022, and the memory 28021 is configured to store necessary instructions and data. The processor 28022 is configured to control the base station 280 to perform a necessary action, for example, configured to control the base station 280 to perform an operation procedure related to the network device in the foregoing method embodiments. The memory 28021 and the processor 28022 may serve one or more boards. In other words, a memory and a processor may be disposed on each board. Alternatively, a plurality of boards may share a same memory and a same processor. In addition, a necessary circuit may further be disposed on each board.

It may be understood that, the processor in embodiments of this application may be an integrated circuit chip, and has a signal processing capability. In an implementation process, steps in the foregoing method embodiments can be implemented by using a hardware integrated logic circuit in the processor, or by using instructions in the form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. It may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or a part of the foregoing embodiments may be implemented by using software, hardware, firmware, or any combination thereof. When software is used to implement the embodiments, all or a part of the embodiments may be implemented in the form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state disk (solid-state disk, SSD)), or the like.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

It should be understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

In conclusion, the foregoing descriptions are merely examples of embodiments of the technical solutions of this application, but are not intended to limit the protection scope of this application. Any modification, equivalent replacement, or improvement made without departing from the spirit and principle of this application shall fall within the protection scope of this application.

## Claims

1. A network device, comprising a processing module (310), a signal transmission module (320), an antenna module (330), and a phase modulation module (340), wherein
a first end of the signal transmission module (320) is electrically connected to the processing module (310), a second end of the signal transmission module (320) is electrically connected to the antenna module (330), the signal transmission module (320) is configured to transmit a signal sent by the processing module (310) to the antenna module (330), and the signal transmission module (320) is configured to transmit a signal received by the antenna module (330) to the processing module (310);
the antenna module (330) comprises M antennas, a spacing between two adjacent antennas in the M antennas is one half of a target wavelength, the target wavelength is a wavelength of signals transmitted through the M antennas, and the M antennas are arranged in a planar configuration, wherein M is a positive integer greater than or equal to 4; and
the phase modulation module (340) is electrically connected to the processing module (310), the phase modulation module (340) is located on a plane perpendicular to a radiation direction of the antenna module (330), the phase modulation module (340) comprises a plurality of phase modulation units, and the phase modulation module (340) is configured to modulate, based on a control signal of the processing module (310), a wavefront phase of signals transmitted or received through the M antennas.

2. The network device according to claim 1, wherein the signal transmission module (320) comprises N transmission channels and K switches, the N transmission channels are electrically connected to the processing module (310), K transmission channels in the N transmission channels are electrically connected to the K switches, and the K switches are electrically connected to P antennas in the M antennas, wherein N, K, and P are all positive integers, N is greater than or equal to K, M is greater than or equal to P, and P is greater than K; and
the K switches are configured to switch a relationship of connection between the P antennas and the K transmission channels.

3. The network device according to claim 2, wherein the M antennas comprise a first antenna set and a second antenna set, a quantity of antennas in the first antenna set is equal to a quantity of antennas in the second antenna set, antennas in the first antenna set are spaced apart from each other, antennas in the second antenna set are spaced apart from each other, the first antenna set is used only for sensing, and the second antenna set is used for sensing and communication.

4. The network device according to claim 2 or 3, wherein M is equal to P, N is equal to K, M is an even number, N is equal to M/2, and the K switches are single-pole double-throw switches.

5. The network device according to any one of claims 1 to 4, wherein the phase modulation module (340) comprises M phase modulation unit sets, and the M phase modulation unit sets are sets of phase modulation units in a coverage area of beams transmitted through the M antennas on the phase modulation module (340).

6. The network device according to claim 5, wherein the M phase modulation unit sets do not comprise a shared phase modulation unit.

7. The network device according to claim 5, wherein the M phase modulation unit sets comprise a shared phase modulation unit.

8. The network device according to claim 7, wherein the M phase modulation unit sets comprise a first phase modulation unit set and a second phase modulation unit set, the M antennas comprise a first antenna and a second antenna, the first phase modulation unit set is a phase modulation unit set corresponding to the first antenna, the second phase modulation unit set is a phase modulation unit set corresponding to the second antenna, and a phase modulation amount of a shared phase modulation unit between the first phase modulation unit set and the second phase modulation unit set is configured as a value related to a required phase modulation amount of the first antenna and a required phase modulation amount of the second antenna.

9. The network device according to any one of claims 5 to 8, wherein shapes of the M phase modulation unit sets match those of beam projections of the M antennas.

10. The network device according to any one of claims 1 to 9, wherein the M antennas are arranged in a circular distribution.
